Europäisches Patentamt

European Patent Office

Office européen des brevets

(11) Publication number: **0 174 017**
**B1**

## EUROPEAN PATENT SPECIFICATION

(45) Date of publication of patent specification: **30.11.88**

(51) Int. Cl.⁴: **G 01 B 7/12**

(21) Application number: **85111156.7**

(22) Date of filing: **04.09.85**

(54) **Improvements relating to capacitive devices for measuring the diameter of a dielectric fibre.**

(30) Priority: **06.09.84 IT 6787884**

(43) Date of publication of application:
**12.03.86 Bulletin 86/11**

(45) Publication of the grant of the patent:
**30.11.88 Bulletin 88/48**

(84) Designated Contracting States:
**AT BE CH DE FR GB LI NL SE**

(56) References cited:
**EP-A-0 069 352**
**FR-A-1 359 960**
**FR-A-2 494 427**
**US-A-3 922 601**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Fabbri, Bruno**
**Via villa della Regina 3**
**Torino (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

Courier Press, Leamington Spa, England.

# Description

The present invention concerns electrical devices for the remote measurement of the physical dimensions of an object and in particular it relates to improvements to capacitive devices for measuring the diameter of a dielectric fibre.

It is known that during dielectric-fibre drawing, plant equipment is to be adjusted so as to obtain a uniform section fibre, and in case of circular section, a constant diameter fibre. Manually- or automatically-operated corrections of possible variations in physical fibre dimensions require a continuous and up-dated knowledge of the values of the dimensions above. Yet, the measurement cannot interfere with the fabrication process. Hence, contact measurements are to be avoided. In this case, as known, remote measurements are to be applied, using optical or electric methods.

An electric measuring apparatus is known (EP—A—69332) in which a fibre, while being drawn, is caused to pass between the plates of a parallel-plate capacitor, and detection is effected of capacitance variations due to the changes in the effective dielectric constant of the space between the plates, caused by the introduction of the fibre into said space and by diameter variations along the fibre which, together with air or another gas contained in the space between the two plates, forms the capacitor dielectric. The magnitude of the diameter or of diameter variations is derived from the capacitance variations. A difficulty when using such apparatus in a manufacturing plant, owing to vibrations of the fibres while passing between the capacitor plates, is that such vibrations cause variations in the capacitance of the measuring capacitor and hence they may be erroneously read as diameter variations.

This phenomenon is due to lower electric field intensity near the plate edges, where the lines of force bend and are more widely separated. Thus, electric capacitance depends also on the position of the dielectric fibre between the plates and decreases when the dielectric-fibre axis, in its translatory movement orthogonal to the electric field, moves closer to the edges. Thus the fibre seems smaller than it actually is.

This disadvantage cannot be overcome by increasing the distance between the plate edges and the fibre under test, wherein in a known manner (FR—A—1 359 960) the marginal zones of the capacitor plates may be excluded from the measurement, as this entails plate expansion and hence an increase in the capacitance C of the capacitor. This effect is detrimental to sensitivity and, hence, to a precise measurement: in fact the relative capacitance variation $(\Delta C)/C$, due to the introduction of the optical fibre with radius $a$ into the space between the plates is given by the formula

$$(\Delta C)/C = (\pi a^2)/S \cdot (\varepsilon_1 - \varepsilon_0)/(\varepsilon_1 + \varepsilon_0) \qquad (1)$$

where S is the surface of the section, orthogonal to the capacitor plates, assumed to be rectangular, and to the fibre axis, $\varepsilon_1$ is the dielectric constant of the material of the fibre, $\varepsilon_0$ is the dielectric constant of the medium (air or another gas) which surrounds the fibre in the space between the two capacitor plates, and C is the capacitance of the capacitor when the dielectric is wholly a medium of dielectric constant $\varepsilon_0$.

From (1) it derives such relative variation is inversely proportional to S, which therefore is to be kept small. For example, in an apparatus using a capacitor with a capacity of 1 pF, there is a variation about 0.003 pF after the introduction of a fibre having a diameter of about 125 µm and dielectric constant $\varepsilon_1$ equal to about 4, while the measuring instrument must possess enough sensitivity to detect diameter variations of 1/1000 and hence capacity variation of $6 \cdot 10^{-6}$ pF.

It is to be noted that the vibration component which is in the plane parallel to the plates is usually more detrimental than that in the perpendicular plane; however, it is advisable to minimize the effects due to both components.

It is known (US—A—3 922 601) to provide for compensation of the vibration effects by means of a capacitance cell that distributes an electric field in a multiplicity of directions simultaneously around the fibre. To this end, the capacitor plates are formed as helicoidally wound strips or, in a simpler embodiment, arrays of plates with each successive set of plates displaced angularly along thread-lines. The plates generate a constant field between them and no final adjustment is possible. This requires a high accuracy in fabricating the plates and in placing them in final position. Moreover, these plates have necessarily rather great surfaces, in order to allow the fibre under test to be surrounded by at least a complete turn. This involves a big capacity and therefore some difficulties in measuring little capacity variations due to size variations of the fibre.

In addition to capacitance variations due to the fibre vibrations, there are also variations due to the thermal expansion of the plates forming the capacitor.

These and other disadvantages are overcome by the capacitive device for measuring the diameters of dielectric fibres provided by the present invention as defined in claim 1 which by easy means allows the effects of dielectric-fibre vibrations to be minimized and the device to be easily adjusted. The capacitive means can be easily built by cheap instruments and are easily installed and adjusted in the measuring device, so as to allow a significant detection of diameter variations in the order of $10^{-7}$ m, when the fibres move within most of the space comprised between the plates. The measures of claims 2 and 3 provide for an easy adjustment, and claim 4 serves for achieving high stability with varying temperature.

Further features of the invention will become apparent from the following description of a preferred embodiment thereof with reference to the annexed drawing which is a perspective view of a part of the capacitor of the capacitive device according to the invention.

The way of compensating for the distortion of the electric field close to the plate edges consists in modifying the plate shape. More particularly, the distance from each other is decreased where the electric field of the equivalent parallel-plate capacitor would be weaker. Plates are denoted by A1 and A2 and the dielectric fibre by FD.

The shown embodiment of the invention makes use of a parallel-plate capacitor and electrical field distortions are compensated for by generating peaks of the electrical field in peripheral regions. In this way the fibre exposition length is increased in peripheral regions. The capacitor plates A1 and A2 are supplemented by electrodes B1 and B2 each having a rectangular base whose length is nearly equal to the capacitor-plate width and further being equipped with two extensions in correspondence with the extremities of a side. These supplementing electrodes B1, B2 are electrically connected to the capacitor plates A1 and A2, respectively, and are arranged in correspondence with the upper part thereof, and possibly an analogous pair can be placed in the inferior part of the capacitor, not shown.

The supplementing electrodes B1, B2 are placed such that the extensions face each other; therethrough the dielectric fibre FD is passed. They can be held in place by magnetic force, in a first adjusting step, by fabricating the various parts with suitable ferro-magnetic materials. They are eventually soldered together with suitable adhesives.

The capacitor is no longer sensitive to fibre FD vibrations, because any electric field diminution at the edges is compensated for, in most of the space comprised between the plates, by strong electric-field regions existing between the extensions. These are such as to increase the fibre exposition length in peripheral capacitor regions, where the field is less strong. During the initial adjusting phase the fibre is caused to vibrate and the plates are moved till the measuring instrument reads the minimum capacitance variation. Afterwards they are blocked in their final position. The plates and electrodes can be made of metallized quartz, thus achieving high stability with varying temperature.

It is evident that the above description is given only as a non limitative example, and that variations and modifications could be made while remaining within the scope of the invention as defined by the appended claims.

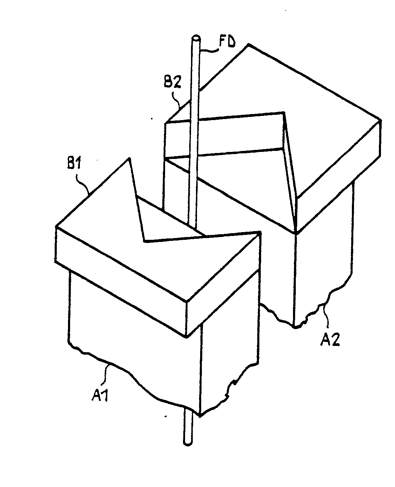

## Claims

1. Capacitive device for measuring the diameter of a dielectric fibre (FD), in which capacitance variations due to changes in dielectric properties of the space between the plates of a capacitor, caused by the introduction of the fibre into said space and by diameter variations along the fibre, are measured, said capacitor compensating for variations of the field and hence minimizing the effects of the dielectric-fibre (FD) vibrations in most of the space comprised between its plates (A1, A2), characterized in that the plates (A1, A2) are each provided with supplementing plate-shaped electrodes (B1, B2) at one or both ends thereof, each supplementing electrode having a rectangular base and two extensions at the ends of one side of the rectangle, which electrodes are electrically connected to the capacitor plates and the extensions face each other and surround the space through which the dielectric fibre (FD) is passed, and that the supplementing electrodes can be moved for adjusting.

2. Capacitive device according to claim 1, characterized in that said supplementing electrodes (B1, B2) are held on the plates (A1, A2) by magnetic force.

3. Capacitive device according to claim 2, characterized in that said supplementing electrodes (B1, B2) are held on the plates (A1, A2) by soldering.

4. Capacitive device according to claim 1, characterized in that said plates (A1, A2) and supplementing electrodes (B1, B2) are made of metallized quartz.

## Patentansprüche

1. Kapazitive Vorrichtung zum Messen des Durchmessers einer dielektrischen Faser (FD), bei der Kapazitätsänderungen aufgrund von Änderungen der dielektrischen Eigenschaften des Raums zwischen den Platten eines Kondensators, die durch die Einführung der Faser in diesen Raum und durch Dur chmesseränderungen entlang der Faser bewirkt werden, gemessen werden, wobei der Kondensator die Feldänderungen kompensiert und dadurch den Effekt von Vibrationen der dielektrischen Faser (FD) im Großteil des zwischen den Platten (A1, A2) des Kondensators liegenden Raums minimalisiert, dadurch gekennzeichnet, daß die Platten (A1, A2) jeweils mit ergänzenden plattenförmigen Elektroden (B1, B2) an einem oder beiden ihrer Enden versehen sind und jede der ergänzenden Elektroden eine rechteckige Basis und zwei Verlängerungen an den Enden einer Seite des Rechtecks aufweisen, wobei die Elektroden elektrisch mit den Kondensatorplatten verbunden sind und die Verlängerungen einander gegenüberstehen und den Raum umgeben, durch den die elektrische Faser (FD) hindurchtritt, und daß die ergänzenden Elektroden zum Zweck des Justierens bewegt werden können.

2. Kapazitive Vorrichtung nach Anspruch 1, dadurch gekennzeichnet, daß die ergänzenden Elektroden (B1, B2) auf den Platten (A1, A2) durch Magnetkraft gehalten sind.

3. Kapazitive Vorrichtung nach Anspruch 2, dadurch gekennzeichnet, daß die ergänzenden Elektroden (B1, B2) auf den Platten (A1, A2) durch LÖten gehalten sind.

4. Kapazitive Vorrichtung nach Anspruch 1, dadurch gekennzeichnet, daß die Platten (A1, A2) und die erganzenden Elektroden aus metallisiertem Quarz bestehen.

## Revendications

1. Dispositif capacitif pour mesurer le diamètre d'une fibre diélectrique (FD), où l'on mesure les variations de capacité dues aux vibrations des caractéristiques diélectriques de l'espace entre les armatures d'un condensateur par suite de l'introduction de la fibre dans ledit espace et des variations de diamètre le long de la fibre, le condensateur compensant les variations du champ électrique et donc minimisant les effets des vibrations de la fibre diélectrique (FD) en grand partie dans l'espace compris entre les armatures (A1, A2), caractérisé en ce que les armatures (A1, A2) sont chacune dotée d'électrodes supplémentaires en forme de plaques (B1, B2) à une de ses extrémités ou à toutes les deux, chaque électrode supplémentaire étant pourvu d'un base rectangulaire et de deux prolongements aux extrémités d'un côté du rectangle, lesdits électrodes sont placés en contact électrique avec les armatures du condensateur et les prolongements sont placés vis-à-vis et entourent l'espace dans lequel la fibre diélectrique (FD) est introduite, et aussi en ce que les électrodes supplémentaires peuvent être réglés en position.

2. Dispositif capacitif suivant la revendication 1, caractérisé en ce que lesdits électrodes supplémentaires (B1, B2) sont maintenus sur les armatures (A1, A2) par attraction magnétique.

3. Dispositif capacitif suivant la revendication 2, caractérisé en ce que lesdits électrodes supplémentaires (B1, B2) sont maintenus sur les armatures (A1, A2) par soudure.

4. Dispositif capacitif suivant la revendication 1, caractérisé en ce que lesdites armatures (A1, A2) et lesdits électrodes supplémentaires (B1, B2) sont réalisés en quartz métallisé.